# EUROPÄISCHE PATENTANMELDUNG

(11) **EP 1 011 102 A1**
(43) Veröffentlichungstag der Anmeldung: **21.06.2000**
(21) Anmeldenummer: 99125080.4
(22) Anmeldetag: 16.12.1999
(51) Int. Cl.: G11B 19/08, G11B 31/00, G09F 25/00, G08B 13/16, G08B 13/18, G08B 15/00

(54) **Vorrichtung zur Wiedergabe mindestens einer Lautsequenz sowie Verwendungen derselben**

(30) Priorität: 16.12.1998 DE 19857832
(71) Anmelder: Marquardt, Stefan, 72488 Sigmaringen (DE)
(72) Erfinder: Marquardt, Stefan, 72488 Sigmaringen (DE); Schaal, Gerhard, 72517 Sigmaringendorf (DE)
(74) Vertreter: Ostertag, Ulrich

(57) **Zusammenfassung**

Eine Vorrichtung (1) zur Wiedergabe mindestens einer Lautsequenz weist eine Wiedergabeeinheit (3) und einen Lautsequenzspeicher (4) auf. Die Wiedergabeeinheit (3) weist einen Schaltkreis (27) zum Starten der Wiedergabe auf. Der Schaltkreis (27) zum Starten der Wiedergabe arbeitet mit einem Sensor (9) zusammen, der berührungslos aktivierbar ist. Die Lautsequenzwiedergabe wird ohne mechanische Schalterbetätigung ausgelöst.

## Beschreibung

Die Erfindung betrifft eine Vorrichtung zur Wiedergabe mindestens einer Lautsequenz mit einer Wiedergabeeinheit, die einen Schaltkreis zum Starten der Wiedergabe aufweist, und einem Lautsequenzspeicher, sowie Verwendungen derselben.

Bekannte derartige Vorrichtungen sind beispielsweise Kassettenrecorder oder Anrufbeantworter. Die Wiedergabe bei diesen Vorrichtungen wird, auch bei einer Fernabfrage des Anrufbeantworters, durch das bewußte Betätigen eines Schalters ausgelöst. Eine Aktivierung der Wiedergabe auf eine andere Weise, die in vielen Anwendungsfällen wünschenswert ist, ist bei derartigen Vorrichtungen nicht möglich.

Es ist daher die Aufgabe der vorliegenden Erfindung, eine Vorrichtung der eingangs genannten Art derart weiterzubilden, daß das Starten der Wiedergabe auch ohne bewußte mechanische Betätigung eines Schalters möglich ist und so insbesondere der Einsatz der Vorrichtung als Hinweisgeber für beliebige Personen möglich wird.

Diese Aufgabe wird erfindungsgemäß dadurch gelöst, daß der Schaltkreis zum Starten der Wiedergabe mit einem berührungslos aktivierbaren Sensor zusammenarbeitet.

Das Starten der Wiedergabe erfordert nun keine mechanische Schalterbetätigung mehr. Damit erschließt die erfindungsgemäße Vorrichtung Anwendungsbereiche, bei denen die Wiedergabe auch von Personen ausgelöst werden kann, die von der Existenz der Vorrichtung keine Kenntnis haben. Ein derartiger allgemeiner Anwendungsfall ist beispielsweise das Geben von allgemeinen Hinweisen an Personen, die sich an einem bestimmten Ort befinden oder eine bestimmte Handlung ausführen, die unabhängig von der Vorrichtung zur Wiedergabe einer Lautsequenz ist. Die Position der Person, die von ihm durchgeführte Handlung oder auch sonstige Eigenschaften der Person können zum Aktivieren des Schaltkreises zum Starten der Wiedergabe herangezogen werden.

Bei einer Ausgestaltung der erfindungsgemäßen Vorrichtung umfaßt der Sensor einen Neigungssensor. In vielen Anwendungsfällen, bei denen die Wiedergabe einer Lautsequenz angebracht ist, führt der Benutzer eine Tätigkeit durch, die mit der Neigung bzw. dem Verkippen eines Gegenstandes, z.B. einer Klappe oder eines Türgriffs, verbunden ist. Eine derartige Bewegung eines Gegenstandes kann durch den erfindungsgemäßen Neigungssensor auf einfache Weise zum Auslösen der Wiedergabe herangezogen werden.

Der Sensor kann dabei als Quecksilberschalter ausgeführt sein. Quecksilberschalter sind in einer Reihe von Ausführungsformen erhältlich und auf einfache und kostengünstige Weise an den speziellen Anwendungsfall anpaßbar.

Eine alternative Ausführungsform der Erfindung umfaßt einen Sensor mit einem Fotosensor, der bei Helligkeits-schwankungen in seiner Umgebung mit dem Schaltkreis zum Starten der Wiedergabe zusammenarbeitet. Diese Ausführungsform ist an Anwendungen der erfindungsgemäßen Vorrichtung angepaßt, bei denen in der Situation, bei der die Lautsequenzwiedergabe ausgelöst werden soll, Helligkeitsänderungen eintreten. Die Erfindung kann dann einfach in Anwendungsfällen eingesetzt sein, bei denen die Beleuchtung eines Raumes aktiviert wird oder Licht in einen abgedunkelten Raum durch eine vorher verschlossene Öffung einfällt. Der Fotosensor kann in seiner Empfindlichkeit dabei so abgestimmt sein, daß nur bestimmte Helligkeitsänderungen, die einem interessierenden Vorgang entsprechen, die Auslösung der Lautsequenzwiedergabe hervorrufen.

Der Fotosensor kann auch Teil einer Lichtschranke sein. Dadurch wird die erfindungsgemäße Vorrichtung an Anwendungsfälle angepaßt, die mit einer Positionsänderung einhergehen. Durch die Positionsänderung entweder der Person selbst oder eines Bedienelements, das funktional mit der erfindungsgemäßen Vorrichtung nicht in Zusammenhang stehen muß, wird dann die Lautsequenzwiedergabe ausgelöst.

Dabei kann der Sensor eine Lichtquelle umfassen, deren gebündelter Lichtstrahl in einer Ruhestellung einer bewegbaren Fläche von dieser reflektiert wird und danach von dem Fotosensor erfaßt wird. Die Auslösung der Wiedergabe durch einen derartigen Sensor erfolgt bei der Benutzung des die reflektierende Fläche aufweisenden Gegenstandes dann redundant und damit sicher, da lediglich eine der beiden nachfolgend geschilderten Voraussetzungen erfüllt sein muß: Entweder wird durch den Benutzer der gebündelte Lichtstrahl unterbrochen, der dann nicht mehr auf den Fotosensor fällt, oder die Lageränderung der bewegbaren Fläche führt zu einer Richtungsänderung des Lichtstrahls, der dann ebenfalls nicht mehr auf den Fotosensor fällt. Das Ausbleiben des Lichtsignals auf dem Fotosensor führt dann zur Auslösung der Lautsequenzwiedergabe.

Eine weitere Ausführungsform der Erfindung weist einen Sensor auf, der einen Geräuschpegelsensor umfaßt. Diese Ausführungsform ist an Anwendungsfälle angepaßt, bei denen bestimmte Geräusche das Auslösen der Lautsequenz hervorrufen sollen. Der Geräuschpegelsensor kann beispielsweise so eingestellt sein, daß er bei der Annäherung einer Person die Lautsequenzwiedergabe auslöst.

Weitere Ausführungsformen der Erfindung weisen einen Sensor auf, der einen Infrarotsensor und/oder einen Bewegungssensor umfaßt. Ein Infrarotsensor detektiert die Annäherung einer Person über die von ihm ausgesandte Wärme und ein Bewegungssensor über deren Bewegungen. Derartige Ausführungsformen werden eingesetzt, wenn das Auslösen der Lautsequenz immer dann erfolgen soll, wenn sich eine Person dem Sensor näher als eine bestimmte Entfernung nähert. Dies ist beispielsweise bei einer Anwendung als Warnhinweisgeber der Fall.

Eine Ausgestaltung der Erfindung weist einen digitalen Lautsequenzspeicher auf. Mit einem derartigen Lautsequenzspeicher lassen sich vom Betreiber der Vorrichtung auch längere Lautsequenzen mit hoher Aufnahmequalität speichern, wobei auch bei wiederholtem Abspielen der Lautsequenz kein Qualitätsverlust der Wiedergabe auftritt.

Der Lautsequenzspeicher kann austauschbar in der Vorrichtung angebracht sein. Dadurch kann z.B. ein Lautsequenzspeicher wechselweise in verschiedenen Vorrichtungen zur Wiedergabe der Lautsequenz eingesetzt werden. Auch können in diesem Fall bereits bespielte Lautsequenzspeicher verwendet werden, die bereits werkseitig vorgegeben sind.

Der Lautsequenzspeicher kann ein wiederbespiel- oder beschreibbarer Datenträger sein. Ein derartiger Datenträger erhöht die Flexibilität bei der Verwendung der Vorrichtung. Lautsequenzen, die nicht mehr aktuell sind, können vom Betreiber gelöscht und durch aktualisierte Lautsequenzen ersetzt werden.

Bei einer Ausgestaltung der Erfindung können im Lautsequenzspeicher mehrere zur Wiedergabe auswählbare Lautsequenzen abspeicherbar sein. Die erfindungsgemäße Vorrichtung kann so vom Betreiber problemlos an eine Reihe von verschiedenen Anwendungssituationen angepaßt werden. Für jede dieser Anwendungssituationen ist dann im Lautsequenzspeicher eine passende Lautsequenz vorgesehen, die entsprechend auswählbar ist.

Eine Ausführungsform der erfindungsgemäßen Vorrichtung weist eine Aufnahmeeinheit für Lautsequenzen auf. Neben der Wiedergabe ist somit auch die Aufnahme von Lautsequenzen ermöglicht. Die Lautsequenz kann dann gut an die anwendungsspezifischen Anforderungen angepaßt werden.

Die Aufnahmeinheit kann lösbar mit einer die Wiedergabeeinheit und den Lautsequenzspeicher aufweisenden Wiedergabeeinrichtung verbunden sein. Bei einer derartigen Ausgestaltung wird die Aufnahmeeinheit zur Lautsequenzaufnahme an die Wiedergabeeinrichtung gesteckt, die dann relativ bauklein gehalten sein kann. Nach erfolgter Aufnahme wird die Aufnahmeeinheit von der Wiedergabeeinrichtung gelöst. Eine Aufnahmeeinheit kann so zur Aufnahme bei mehreren Wiedergabeeinrichtungen verwendet werden. Alternativ kann die Aufnahmeinheit so ausgestaltet sein, daß die Lautsequenzaufnahme von der Wiedergabeeinrichtung getrennt erfolgen kann. Die Aufnahmeeinheit wird dann nur zum Übertragen der bereits vorher aufgenommenen Lautsequenz mit der Wiedergabeeinrichtung verbunden.

Eine Weiterbildung der erfindungsgemäßen Vorrichtung weist eine durch eine Solarzelleneinheit speisbare Batterie auf. Vor allem bei Anwendungen, bei denen keine Energieversorgung über ein Stromnetz möglich ist, die aber zumindest phasenweise bei Tageslicht durchgeführt werden, ist somit eine autarke Energieversorgung möglich.

Die erfindungsgemäße Vorrichtung kann mit einem Klebeband, insbesondere einem doppelseitigen Klebeband, an einem Grundkörper anbringbar sein. Eine derartige Anbringung ist auch nachträglich einfach und kostengünstig möglich, ohne daß dazu an dem Grundkörper spezielle Einrichtungen zur Halterung der Vorrichtung ausgebildet sein müssen.

Eine Ausführungsform der erfindungsgemäßen Vorrichtung ist zur Installation in einem Türgriff ausgebildet. Die Bauteile, die die Vorrichtung aufbauen, sind dazu so zusammengefaßt, daß sie eine im wesentlichen stabförmige Einheit bilden, die in eine entsprechende Öffnung des Türgriffs eingesetzt werden kann. Eine derartige elegante Unterbringung der erfindungsgemäßen Vorrichtung schützt diese gegen äußere Einflüsse.

Die Vorrichtung kann als Hinweisgeber an einer Tür verwendet werden. Dabei wird beispielsweise die Neigung des Türgriffs, der zum Türöffnen betätigt wird, zum Aktivieren der Lautsequenzwiedergabe, z.B. durch den Neigungssensor oder durch die Lichtschranke, genutzt. Eine derartige Verwendung führt zu vielfältigen Anwendungsgebieten, etwa bei Durchgangs-, Auto-, Schrank- oder auch Tresortüren.

Die erfindungsgemäße Vorrichtung kann ebenso als Hinweisgeber an einem Briefkasten verwendet werden. Dabei kann beispielsweise das Verkippen der Klappe des Briefkastens beim Einwerfen von Sendungen zum Auslösen der Lautsequenzwiedergabe genutzt werden. Die erfindungsgemäße Vorrichtung läßt sich dann beispielsweise dazu verwenden, das Einwerfen von Werbesendungen durch einen entsprechenden Hinweis an die die Klappe betätigende Person zu verhindern.

Ausführungsbeispiele der Erfindung werden nachfolgend anhand der Zeichnung näher erläutert; es zeigen:
- Figur 1: ein Blockschaltbild einer Vorrichtung zur sensorgesteuerten Lautaufnahme und -wiedergabe;
- Figuren 2 und 3: zwei schematisch dargestellte Verwendungsarten der Vorrichtung zur sensorgesteuerten Lautaufnahme und -wiedergabe;
- Figur 4: ein Blockschaltbild einer abgewandelten Vorrichtung zur sensorgesteuerten Lautaufnahme und -wiedergabe; und
- Figur 5: eine schematische Darstellung eines alternativen Sensors bei der Verwendung der Vorrichtung gemäß Figur 3.

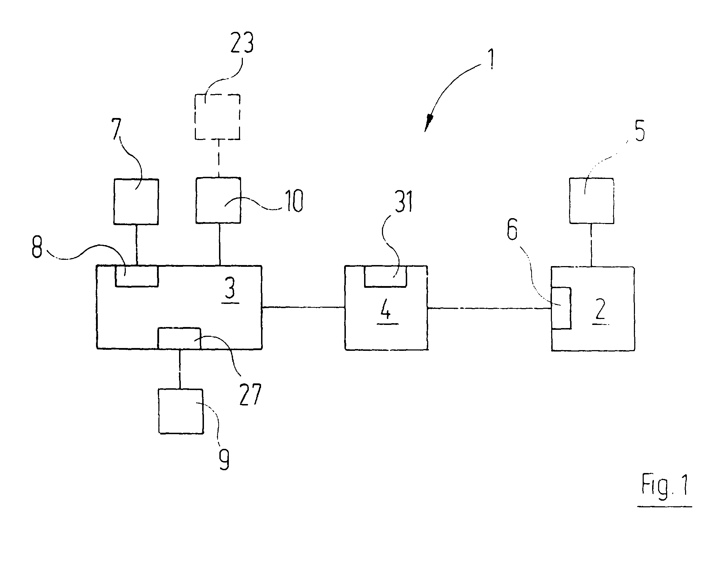

Eine in Figur 1 insgesamt mit den Bezugszeichen 1 bezeichnete Vorrichtung zur neigungsgesteuerten Lautaufnahme und -wiedergabe umfaßt eine Aufnahmeeinheit 2, eine Wiedergabeeinheit 3 und einen Speicher 4. In die Aufnahmeeinheit 2 ist ein Analog/Digitalwandler 6 integriert, mit dem die über ein Mikrophon 5 aufgenommenen Lautsignale digitalisiert werden. Die digitalen Signale werden in dem Speicher 4, der als austauschbares Mikrochip-Speichermodul zum steckbaren Verbinden mit der Wiedergabeeinheit 3 ausgeführt ist, als abrufbare Lautsequenzen abgelegt.

An die Wiedergabeinheit 3 ist ein Lautsprecher 7 angeschlossen. Bei der Lautwiedergabe ruft die Wiedergabeinheit 3 digital codierte Lautsequenzen aus dem Speicher 4 ab, wandelt sie in einem Digital/Analog-Wandler 8, der innerhalb der Wiedergabeeinheit 3 angeordnet ist, in analoge Lautsignale um und gibt die umgewandelten Lautsignale zur Lautwiedergabe auf den Lautsprecher 7.

Ein Wiedergabe-Schaltkreis 27 der Wiedergabeeinheit 3 ist mit einem Neigungssensor 9 verbunden. Dieser ist als Quecksilberschalter ausgeführt. Wird eine Quecksilbersäule in dem Neigungssensor 9 über einen bestimmten Grenzwinkel hinaus verkippt, so gibt der Neigungssensor 9 ein Wiedergabe-Startsignal an den Wiedergabe-Schaltkreis 27 der Wiedergabeeinheit 3 weiter.

Zur Energieversorgung der Vorrichtung 1 ist eine Batterie 10 vorgesehen. Bei der in Figur 1 durchgezogen gezeichneten Ausführungsform der Batterie 10 handelt es sich um eine handelsübliche Batterie zum Wechseln.

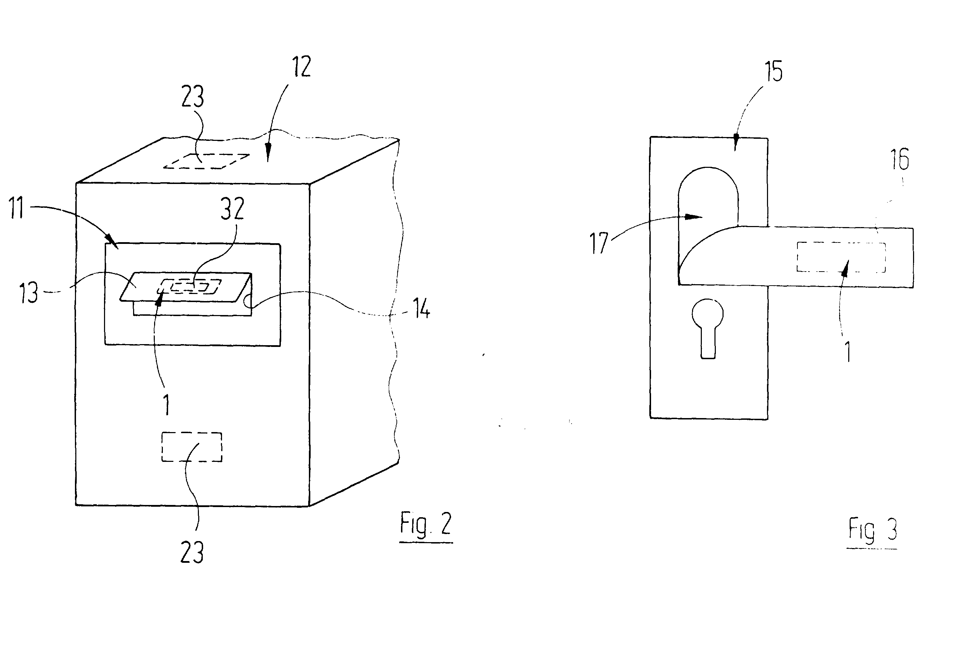

Typische Verwendungsarten der Vorrichtung 1 zur sensorgesteuerten Lautaufnahme und -wiedergabe zeigen die Figuren 2 und 3:

In Figur 2 ist ein Briefkasten 11 dargestellt, der in eine Installationswand 12, z.B. in einen Pfosten eines Gartentors oder in den Bereich einer Hauswand, eingebaut ist. Der Briefkasten 11 weist eine Klappe 13 auf, die beim Aufklappen eine Aufnahmeöffnung 14 freigibt, durch die in üblicher Weise z.B. Postsendungen oder Zeitungen in den Briefkasten 11 gegeben werden können.

An der dem Innern des Briefkastens 11 zugewandten Seite der Klappe 13 ist die Vorrichtung 1 zur sensorgesteuerten Lautaufnahme und Wiedergabe fest montiert, sodaß diese beim Aufklappen der Klappe 13 mit verkippt wird.

Die Montage erfolgt durch Verkleben der Vorrichtung 1 mit der Klappe 13 mittels doppelseitigen Klebebandes 32. Alternativ kann die Vorrichtung 1 mit der Klappe 13 verschraubt sein.

Figur 3 zeigt einen Türbeschlag 15, mit dem eine nicht dargestellte Tür versehen ist. Im Innern des abgewinkelten Endbereichs 16 des Türgriffs 17 des Türbeschlags 15 ist die Vorrichtung 1 zur gesteuerten Lautaufnahme und -wiedergabe so montiert, daß sie beim Betätigen des Türgriffs 17 mit dessen Endbereich 16 verkippt wird.

Die Vorrichtung 1 zur gesteuerten Lautaufnahme und wiedergabe funktioniert folgendermaßen:

Bewegt ein Benutzer den Grundkörper, an dem die Vorrichtung 1 montiert ist, also beispielsweise die Klappe 13 des Briefkastens 11 von Fig. 2 oder den Türgriff 17 von Fig. 3, so spricht der Neigungssensor 9 an, und die Wiedergabeinheit 3 startet die Lautwiedergabe mit der im Speicher 4 abgespeicherten Sprach-, Musik- oder Geräuschsequenz. Eine derartige Sequenz ist beispielsweise ein Hinweis ("Bitte keine Werbung einwerfen!", "Bitte nicht stören!").

Die wiedergegebene Lautsequenz kann aus einer Reihe abgespeicherter Lautsequenzen zur Wiedergabe vorgewählt werden. Dabei wird ein Vorwahl-Schaltkreis 31, der in den Speicher 4 integriert ist, über ein in der Zeichnung nicht dargestelltes Bedienfeld zur Vorwahl einer bestimmten Lautsequenz programmiert. Die vorgewählte Lautsequenz wird beim Ansprechen des Neigungssensors 9 wiedergegeben.

Der Speicherinhalt des Speichers 4 kann gelöscht und mit einer neuen Lautsequenz belegt werden, indem mit dem Mikrophon 5 eine neue Lautsequenz aufgenommen wird. Diese steht dann zur Wiedergabe zur Verfügung. Alternativ oder zusätzlich ist beim Speicher 4 die Verwendung von Mikrochip-Speichermodulen mit bereits werkseitig abgespeicherten Lautsequenzen möglich.

Statt des Neigungssensors 9 kann bei einer alternativen Ausführungsform der Vorrichtung 1 auch ein Fotosensor verwendet werden. Ein derartiger Fotosensor spricht auf die Änderung von Lichtverhältnissen an. Bei der Verwendung der Vorrichtung an einem Briefkasten wird der Fotosensor im Innern des Briefkastens 11 montiert. Er kann dabei ein integrierter Bestandteil der Vorrichtung 1 sein, alternativ aber auch anderswo innerhalb des Briefkastens 11 angebracht sein (nicht in der Zeichnung dargestellt). Beim Öffnen der Klappe 13 dringt Licht in das ansonsten relativ dunkle Innere des Briefkastens 11. Der Fotosensor ist so eingestellt, daß die durch das Öffnen der Briefkasten-Klappe hervorgerufene Helligkeitsänderung im Innern des Briefkastens 11 ein Ansprechen des Fotosensors und damit den Start der Lautsequenzwiedergabe durch die Wiedergabeeinheit 3 zur Folge hat.

Durch den Ort der Anbringung des Fotosensors im Briefkasten 11 oder durch einen mit der Entleerungsklappe des Briefkastens (nicht in der Zeichnung dargestellt) gekoppelten Unterbrecher für den Wiedergabe-Schaltkreis 27 kann dabei sichergestellt werden, daß die Wiedergabe der Lautsequenz nicht unerwünscht beim Leeren des Briefkastens 11 erfolgt.

Als weitere Alternative zum Neigungssensor 9 ist eine in der Zeichnung ebenfalls nicht dargestellte Lichtschranke vorgesehen. Hierbei wird durch die Bewegung des Grundkörpers der Lichtweg zwischen einer Lichtquelle und einem Fotosensor unterbrochen, so daß sich der Lichteinfall auf den Fotosensor charakteristisch ändert. Diese Änderung löst ein Signal aus, mit dem der Lichtschranken-Fotosensor den Start der Lautwiedergabe durch die Wiedergabeeinheit 3 steuert.

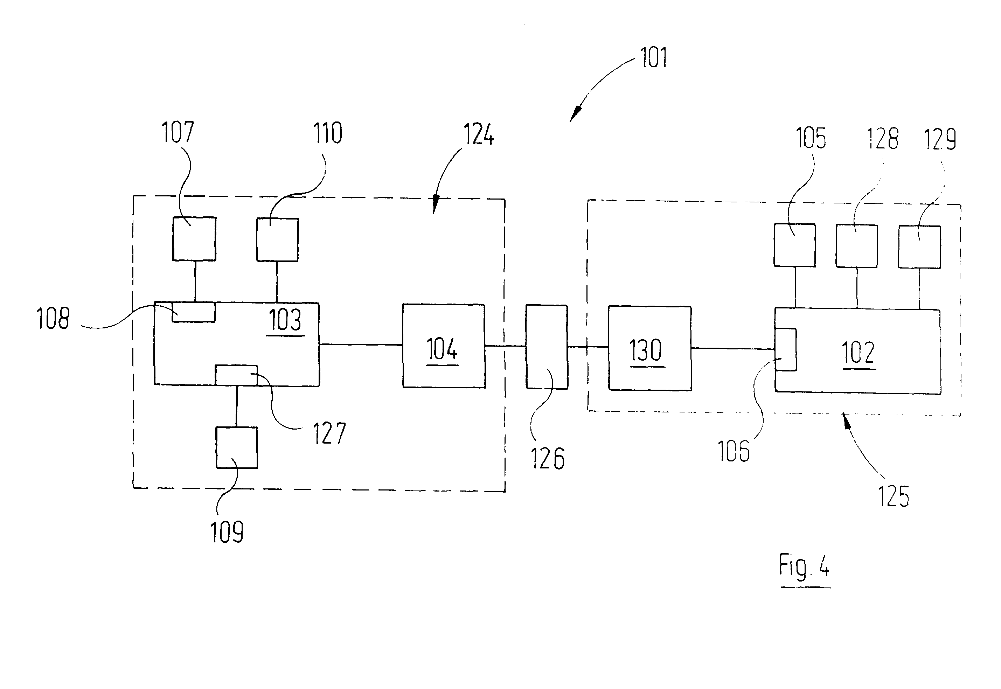

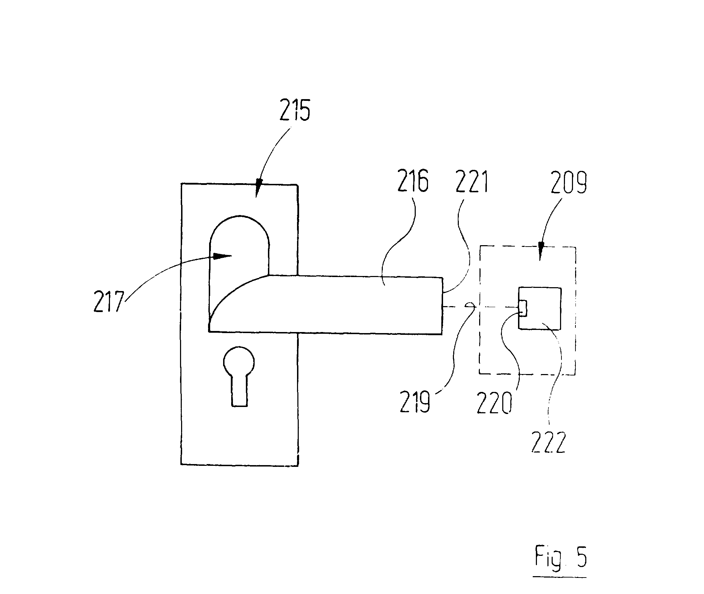

Weitere Ausführungsformen einer Vorrichtung zur sensorgesteuerten Lautaufnahme und -wiedergabe bzw. einzelner Komponenten hiervon zeigen die Figuren 4 und 5. In diesen sind Bauelemente, die oben schon unter Bezugnahme auf die Figuren 1 bis 3 erläutert wurden, mit jeweils um 100 erhöhten Bezugszeichen versehen. Diese Bauelemente werden nachstehend nicht nochmals im einzelnen beschrieben.

In vielen Anwendungsfällen der Vorrichtung ist es zweckmäßiger, statt des Unterbrechens eines Lichtwegs mit einer Lichtschranke, wie oben beschrieben, die Änderung einer Reflexionsebene sensorisch zu erfassen und zum Auslösen der Lautwiedergabe zu verwenden. Eine derartige Reflexions-Senoreinheit 209 als Alternative zum Neigungssensor 9 ist in Figur 5 als gestrichelter Block schematisch dargestellt. Hierbei trifft der gebündelte Lichtstrahl 219 einer Laserdiode 220 auf die ebene und reflektierend polierte Endfläche 221 des Endbereichs 216 des Türgriffs 217. In der in Figur 5 gezeigten Ruhestellung des Türgriffs 217 wird der Lichtstrahl 219 im wesentlichen in sich selbst zurückreflektiert und kann so durch einen Fotosensor 222, der der Laserdiode 220 benachbart ist, detektiert werden. Beim Betätigen des Türgriffs 217 wird dessen Endbereich 216 nach unten verkippt. Dies führt dazu, daß der von der verkippten Endfläche 221 reflektierte Strahl des Lichtstrahls 219 nicht mehr auf den Fotosensor 222 trifft (im Extremfall trifft der Lichtstrahl überhaupt nicht mehr die Endfläche 221). Eine Helligkeitsänderung kann auch dadurch hervorgerufen werden, daß der Lichtstrahl 219 direkt vom Benutzer unterbrochen wird. Eine durch die Beinflussung des Lichtwegs des Lichtstrahls 219 hervorgerufene Helligkeitsänderung auf dem Fotosensor 222 wird von diesem detektiert und löst über eine in der Figur 5 nicht dargestellte Steuerleitung die Lautsequenzwiedergabe durch eine ebenfalls nicht dargestellte Wiedergabeeinheit aus.

Weitere Alternativen für den Neigungssensor 9 können ein Infrarot-Sensor oder ein Bewegungssensor sein. Diese detektieren die Annäherung eines Benutzer an die Vorrichtung und lösen dann die Lautwiedergabe aus.

Die Annäherung eines Benutzers ist auch durch einen Geräuschpegelsensor detektierbar. Ein derartiger Sensor hat einen einstellbaren Grundgeräuschpegel, der an die auftretenden Hintergrundgeräusche im Bereich des Geräuschpegelsensor angepaßt wird. Überschreitet der Geräuschpegel einen vorgegebenen Grenzwert, so aktiviert der Geräuschpegelsensor den Wiedergabe-Schaltkreis 27.

Alternativ zu einer Batterie 10 kann die Vorrichtung 1 zur Energieversorgung auch einen Akkumulator aufweisen, der von einer Stromversorgung 23 gespeist wird. Diese ist in Figur 1 schematisch als gestrichelter Block dargestellt ist. Die Stromversorgung 23 kann beispielsweise als Solarzelleneinheit ausgeführt sein, die Tageslicht in elektrische Energie umwandelt. Bei der Verwendung der Vorrichtung 1 an der Briefkasten-Klappe 13 sind die Solarzelleneinheiten 23 in die Installationswand 12 integriert und über Unterputz-Leitungen mit der Vorrichtung 1 zur Energieversorgung verbunden. Alternativ kann die als Akkumulator ausgeführte Batterie 10 auch über ein Netzteil gespeist werden.

Eine weitere Ausführungsform einer Vorrichtung 101 zur sensorgesteuerten Lautaufnahme und -wiedergabe zeigt Figur 4. Die Vorrichtung 101 ist in eine Wiedergabeinrichtung 124 und eine Aufnahmeeinrichtung 125 aufgeteilt, die über einen Kontaktstecker 126 elektrisch miteinander verbunden sind.

Die Aufnahmeeinrichtung 125 verfügt bei dieser Ausführungsform über einen eigenen an die Aufnahmeeinheit 102 angeschlossenen Aufnahmespeicher 130. Außerdem weist die Aufnahmeeinrichtung 125 einen Aufnahme-Kontrollautsprecher 128 auf, der an die Aufnahmeeinheit 102 angeschlossen ist. Damit ist es möglich, mit der Aufnahmeeinrichtung 125 den Aufnahmevorgang für Lautsequenzen durchzuführen und diesen zu überprüfen, während die Aufnahmeeinrichtung 125 von der Wiedergabeeinrichtung 124 getrennt ist. Nach erfolgter Aufnahme wird die Aufnahmeinrichtung 125 an die Wiedergabeeinrichtung 124 gesteckt und die digitalisierte Lautsequenz wird vom Aufnahmespeicher 130 der Aufnahmeeinrichtung 125 an den Speicher 104 der Wiedergabeeinrichtung 124 übertragen.

An die Aufnahmeeinheit 102 ist außerdem eine Stromversorgung 129 angeschlossen.

Bei einer nicht dargestellten Ausführungsform mit ebenfalls trennbarer Aufnahme- und Wiedergabeeinrichtung ist äie Aufnahmeeinrichtung schon bei der Aufnahme einer Lautsequenz an die Wiedergabeeinrichtung über den Kontaktstecker angeschlossen. Nach erfolgter Aufnahme und Abspeicherung der Lautsequenz im Speicher wird der Kontaktstecker gelöst und die transportable Aufnahmeeinrichtung entfernt. Ein zusätzlicher Aufnahme-Kontrollautsprecher bzw. eine zusätzliche Stromversorgung entfallen bei dieser Ausführungsform, da deren Funktion von den entsprechenden Bauteilen der Wiedergabeeinrichtung übernommen wird.

Der oder die Speicher 4 bzw. 104 können alternativ zum oben beschriebenen Chipspeicher z.B. auch als CD-ROM oder als analoges Speicherelement, wie ein Magnetband oder eine Cassette, ausgeführt sein. Bei einer derartigen Ausführungsform entfallen der oben erwähnte A/D- sowie der D/A-Wandler.

Der Speicher 4 bzw. 104 kann Daten enthalten, die nur ausgelesen werden können. Dies ist beispielsweise bei der Ausführung als CD-ROM der Fall. Alternativ können die Daten lösch- und wiederbeschreibbar sein (Cassette, wiederbeschreibbares Speichermodul, wiederbeschreibbare CD).

Die Auswahl der Lautsequenz kann alternativ zur Vorwahl auch interaktiv durch den Benutzer erfolgen. Dazu umfaßt die Vorrichtung 1 bzw. 101 eine in der Zeichnung nicht dargestellte Auswahlerkennungseinheit. Letztere kann als Spracherkennungsmodul realisiert sein.

Bei einer weiteren Alternative der Vorrichtung 1 bzw. 101 ist ihre Montage in den jeweiligen Grundkörper schon bei dessen Herstellung berücksichtigt. Die Vorrichtung 1 bzw. 101 kann dann auch dezentral realisiert sein, d.h. mit nicht zu einer kompakten Einheit (Vorrichtung 1 bzw. Wiedergabeinrichtung 124) zusammengefaßten Bauteilen.

## Patentansprüche

1. Vorrichtung zur Wiedergabe mindestens einer Lautsequenz mit einer Wiedergabeeinheit, die einen Schaltkreis zum Starten der Wiedergabe aufweist, und einem Lautsequenzspeicher,
dadurch gekennzeichnet, daß
der Schaltkreis (27; 127) zum Starten der Wiedergabe mit einem berührungslos aktivierbaren Sensor (9; 109; 209) zusammenarbeitet.

2. Vorrichtung nach Anspruch 1, dadurch gekennzeichnet, daß der Sensor (9; 109; 209) einen Neigungssensor umfaßt.

3. Vorrichtung nach Anspruch 2, dadurch gekennzeichnet, daß der Sensor (9; 109) als Quecksilberschalter ausgeführt ist.

4. Vorrichtung nach Anspruch 1, dadurch gekennzeichnet, daß der Sensor (9; 109; 209) einen Fotosensor (222) umfaßt, der bei Helligkeitsschwankungen in seiner Umgebung mit dem Schaltkreis (27; 127) zum Starten der Wiedergabe zusammenarbeitet.

5. Vorrichtung nach Anspruch 4, dadurch gekennzeichnet, daß der Sensor (9; 109; 209) eine Lichtschranke (219 bis 222) umfaßt.

6. Vorrichtung nach einem der Ansprüche 4 oder 5, dadurch gekennzeichnet, daß der Sensor (209) eine Lichtquelle (220) umfaßt, deren gebündelter Lichtstrahl (219) in einer Ruhestellung einer bewegbaren Fläche (221) von dieser reflektiert wird und danach von dem Fotosensor (222) erfaßt wird.

7. Vorrichtung nach einem der vorhergehenden Ansprüche, dadurch gekennzeichnet, daß der Sensor (9; 109) einen Geräuschpegelsensor umfaßt.

8. Vorrichtung nach einem der vorhergehenden Ansprüche, dadurch gekennzeichnet, daß der Sensor (9; 109) einen Infrarotsensor und/oder einen Bewegungssensor umfaßt.

9. Vorrichtung nach einem der vorhergehenden Ansprüche, gekennzeichnet durch einen digitalen Lautsequenzspeicher (4; 104).

10. Vorrichtung nach einem der vorhergehenden Ansprüche, dadurch gekennzeichnet, daß der Lautsequenzspeicher (4; 104) austauschbar in der Vorrichtung (1; 101) angebracht ist.

11. Vorrichtung nach einem der vorhergehenden Ansprüche, dadurch gekennzeichnet, daß der Lautsequenzspeicher (4; 104) ein wiederbespiel- oder beschreibbarer Datenträger ist.

12. Vorrichtung nach einem der vorhergehenden Ansprüche, dadurch gekennzeichnet, daß im Lautsequenzspeicher (4; 104) mehrere zur Wiedergabe auswählbare Lautsequenzen abspeicherbar sind.

13. Vorrichtung nach einem der vorhergehenden Ansprüche, dadurch gekennzeichnet, daß sie eine Aufnahmeeinheit (2; 102) für Lautsequenzen aufweist.

14. Vorrichtung nach Anspruch 13, dadurch gekennzeichnet, daß die Aufnahmeeinheit (102) lösbar mit einer die Wiedergabeeinheit (103) und den Lautsequenzspeicher (104) aufweisenden Wiedergabeeinrichtung (124) verbunden ist.

15. Vorrichtung nach einem der vorhergehenden Ansprüche, dadurch gekennzeichnet, daß sie eine durch eine Solarzelleneinheit (23) speisbare Batterie (10) aufweist.

16. Vorrichtung nach einem der vorhergehenden Ansprüche, dadurch gekennzeichnet, daß sie mit einem Klebeband, insbesondere einem doppelseitigen Klebeband (32) an einem Grundkörper (13) anbringbar ist.

17. Vorrichtung nach einem der vorhergehenden Ansprüche, dadurch gekennzeichnet, daß sie zur Installation in einem Türgriff (17; 217) ausgebildet ist.

18. Verwendung der Vorrichtung nach Anspruch 17 als Hinweisgeber an einer Tür.

19. Verwendung der Vorrichtung nach einem der Ansprüche 1 bis 16 als Hinweisgeber an einem Briefkasten (11).
